# FASCICULE DE BREVET EUROPEEN

(11) **EP 2 516 071 B1**
(45) Date de publication et mention de la délivrance du brevet: **20.05.2015**
(21) Numéro de dépôt: 10808907.9
(22) Date de dépôt: 22.12.2010
(51) Int. Cl.: B05D 5/08, C08F 290/06, C08G 18/67, C08K 3/36, C08K 9/06, C09D 175/16

(54) **REVÊTEMENT MULTIFONCTIONNEL POUR AÉRONEFS**
MULTIFUNKTIONSBESCHICHTUNG FÜR FLUGZEUGE
MULTIFUNCTIONAL COATING FOR AIRCRAFT

(30) Priorité: 23.12.2009 FR 0959445
(43) Date de publication de la demande: 31.10.2012
(73) Titulaire: Airbus Group SAS, 75016 Paris (FR); Institut National des Sciences Appliquées de Lyon, 69621 Villeurbanne (FR)
(72) Inventeur: CAMPAZZI, Elisa, F-92100 Boulogne Billancourt (FR); VILLATTE, Martine, F-92500 Rueil Malmaison (FR); GALY, Jocelyne, F-69100 Villeurbanne (FR); GERARD, Jean-François, F-69500 Bron (FR); GAUDIN, Franck, F-69006 Lyon (FR)
(74) Mandataire: Chauveau, Ariane Cécile Marie
(86) Numéro de dépôt international: PCT/FR2010/000868
(87) Numéro de publication internationale: WO 2011/086248

(56) Documents cités:
- EP-A2- 0 959 102
- WO-A1-90/05752
- US-A1- 2004 225 039
- US-A1- 2005 148 739

## Description

La présente invention se rapporte à un revêtement de surface, notamment pour aéronefs. L'invention se rapporte également à une composition permettant d'obtenir ce revêtement, ainsi qu'à un procédé de formation de ce revêtement.

Les fonctions d'un système de revêtement pour les avions civils sont notamment la protection mécanique et chimique de la cellule. En effet, la surface externe des avions est destinée à être soumise aux frottements de l'air et exposée aux ultraviolets, ainsi qu'à un environnement corrosif (eau, sels...) et érodant (sable, pluie...).

De plus, cette surface externe est susceptible d'être souillée, notamment par des collisions avec des insectes. Ce type de pollution peut engendrer une perturbation non négligeable de l'aérodynamisme.

Par ailleurs, la présence d'eau ou de givre sur la surface externe d'un avion peut perturber plusieurs paramètres de vol, comme la portance, la traînée et/ou la poussée. Il est donc préférable d'utiliser des revêtements antigivre et hydrophobes.

Enfin, dans le but de diminuer la consommation énergétique d'un avion, il est intéressant de réduire les frottements de l'air sur la cellule, notamment la traînée de frottement.

Des solutions à chacun de ces problèmes sont connues. Il est notamment courant, dans l'état de la technique, d'utiliser des revêtements multicouches. Chaque couche remplit une fonction de protection de la surface externe de l'avion.

La présente invention a cependant pour objet un revêtement regroupant plusieurs fonctions en une seule couche.

Un objet principal de l'invention est un revêtement apte à fournir des surfaces à la fois autonettoyantes et antigivre.

Il est connu, dans la conception de surfaces autonettoyantes, de chercher à reproduire « l'effet Lotus » : une gouttelette d'eau qui se dépose sur une feuille de lotus a tendance à rester sous forme sphérique, en raison des propriétés de surface de ladite feuille. L'eau ruisselle en entraînant toutes les particules de saletés déposées sur la feuille de lotus, qui reste donc parfaitement propre.

Les propriétés de la feuille de lotus, définies sous le nom de superhydrophobicité, sont liées à la nature chimiquement hydrophobe de sa surface, ainsi qu'à une nanorugosité. Une feuille de lotus possède en effet des aspérités de quelques nanomètres. Lorsqu'une goutte d'eau se dépose sur la feuille, des poches d'air se forment entre la goutte et les irrégularités de surface. La goutte tend donc à conserver une forme sphérique.

Des surfaces autonettoyantes reproduisant l'effet Lotus sont par exemple décrites dans le brevet US7544411.

Les propriétés antigivre des revêtements de surface sont souvent apportées par le caractère chimiquement hydrophobe desdites surfaces. Il est notamment connu d'utiliser des polymères fluorés, comme dans le brevet US5035934. En revanche, la rugosité d'une surface favorise la nucléation des cristaux de glace, donc l'apparition de givre.

Afin d'obtenir un revêtement de surface pour aéronefs combinant des propriétés autonettoyantes et antigivre, il convient donc de déterminer un niveau optimal de rugosité.

De plus, le revêtement doit posséder une certaine résistance à l'érosion, afin que ladite rugosité soit suffisamment stable dans le temps.

La présente invention permet d'obtenir un revêtement dont les propriétés de surface induisent des effets autonettoyants et antigivre, ainsi qu'une résistance satisfaisante à l'érosion. Un objet de la présente invention se rapporte à un procédé de revêtement d'une surface, comprenant les étapes suivantes :
- appliquer sur une surface (8) une couche (7) d'une composition de revêtement comprenant: entre 35% et 75% en masse d'oligomères uréthane-acrylate ; entre 15% et 60% en masse d'un diluant copolymérisable avec les oligomères uréthane-acrylate ; entre 0,5% et 5% en masse de silice pyrogénée hydrophobe,
et un photo-initiateur de polymérisation, ladite couche ayant une épaisseur comprise entre 15 et 300 µm,
- former mécaniquement des sillons (9) parallèles sur la couche de composition, lesdits sillons ayant une profondeur de 10 à 100 µm, et polymériser simultanément ladite couche sous ultraviolets.

Par « oligomère uréthane-acrylate », on entend un oligomère comprenant un bloc polyuréthane, linéaire ou ramifié, comportant des groupements acrylate en terminaison de chaînes et/ou en position latérale sur une chaîne principale.

Par « bloc polyuréthane », on entend une macromolécule comportant des fonctions uréthane.

Par « silice pyrogénée hydrophobe », on entend une silice pyrogénée ayant subi un traitement pour augmenter l'hydrophobicité de sa surface.

Selon une forme préférentielle de l'invention, la silice pyrogénée hydrophobe est fonctionnalisée polydiméthylsiloxy- ou diméthylsiloxy-, avec un taux de fonctions hydroxyles résiduelles inférieur ou égal à 50%.

Selon une forme préférentielle de l'invention, la composition comprend en outre entre 0,5% et 5% en masse d'au moins un composé fluoré copolymérisable avec les oligomères uréthane-acrylate. Ce type de composé fluoré permet d'accentuer l'hydrophobicité du revêtement.

Selon une forme préférentielle de l'invention, le composé fluoré copolymérisable avec les oligomères uréthane-acrylate porte une ou des fonctions acrylate ou méthacrylate.

Un autre objet de la présente invention est un procédé de revêtement d'un aéronef, comprenant les étapes suivantes : appliquer sur une surface préparée une couche de composition telle que décrite ci-dessus, puis polymériser ladite couche. Pour l'étape de polymérisation, la matrice uréthane-acrylate permet de choisir entre un traitement thermique et un traitement sous ultraviolets. Dans le cas du traitement sous ultraviolets, un photo-initiateur de polymérisation des acrylates est ajouté à la composition. Dans le cas du traitement thermique, on peut également ajouter un amorceur à la composition.

Selon une forme préférentielle de l'invention, le procédé de revêtement comporte une étape de formation mécanique de reliefs sur la couche de composition. De tels reliefs ont pour but de réduire la traînée de frottement causée par des fluides circulant au contact du revêtement. Un revêtement comportant des reliefs similaires est notamment décrit dans le brevet EP1578600.

Selon ladite forme préférentielle de l'invention, une couche de composition telle que précédemment décrite est appliquée sur une surface préparée, ladite composition comprenant un photo-initiateur ; puis des sillons parallèles sont formés mécaniquement sur la couche de composition et ladite couche est simultanément polymérisée sous ultraviolets.

Selon une autre forme préférentielle de l'invention, des sillons sont formés directement au cours de l'étape d'application de la couche de composition sur la surface, par un dépôt de quantités différentes de composition selon la zone concernée de ladite surface.

L'invention a également pour objet un revêtement d'une surface d'aéronef, obtenu par un procédé tel que décrit ci-dessus.

Outre des revêtements destinés à être appliqués à l'état liquide sur des structures d'avions, l'invention permet de réaliser des couches adhésives autosupportées, ou films adhésivés, permettant une mise en place à l'état solide. Un autre objet de l'invention est donc un film pour revêtement d'aéronef, comportant une couche externe, formée par un procédé tel que décrit précédemment, ainsi qu'une couche adhésive, destinée à entrer en contact avec une structure d'aéronef.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : schéma en coupe d'un revêtement pour aéronef selon un premier mode de réalisation de l'invention ;
- Figure 2 : schéma en coupe d'un revêtement pour aéronef selon un deuxième mode de réalisation de l'invention
- Figure 3 : schéma en coupe d'un revêtement pour aéronef selon un troisième mode de réalisation de l'invention ;
- Figure 4: Tableau comparatif de mesures effectuées sur des revêtements selon divers modes de réalisation de l'invention ;
- Figure 5: Graphique montrant une variation de viscosité d'une composition selon un mode de réalisation de l'invention, en fonction d'un cisaillement appliqué.

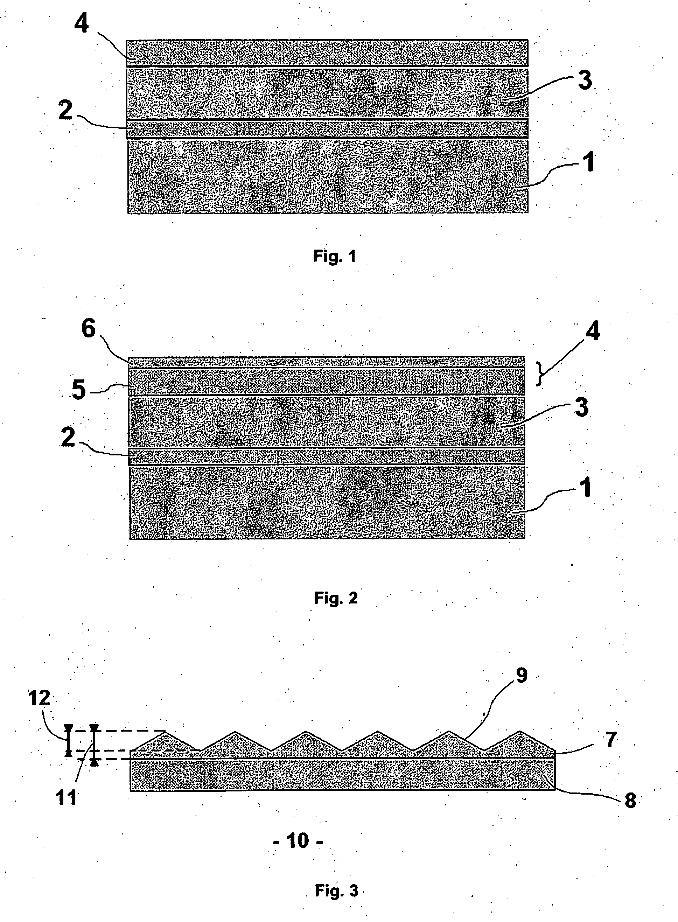

La figure 1 représente une vue en coupe d'un revêtement pour aéronefs. On distingue un substrat 1 métallique, qui est une partie d'une structure d'avion. Le substrat 1 est par exemple constitué d'un alliage d'aluminium.

Le substrat 1 est recouvert d'une première couche 2 de revêtement. Cette première couche 2 peut notamment être une couché d'anodisation ou un revêtement de conversion. Dans l'état de la technique, cette première couche 2 est généralement formulée à l'aide d'une matrice minérale. Elle fournit une protection contre la corrosion et améliore l'adhérence entre le substrat 1 métallique et une ou plusieurs autres couches de revêtement.

La première couche 2 de revêtement est recouverte d'une couche intermédiaire, aussi appelée couche 3 de primaire. La couche 3 de primaire comprend typiquement une matrice de résine organique pigmentée. La couche 3 de primaire est habituellement le fournisseur principal d'une protection contre la corrosion de la structure de l'avion.

Dans l'état de la technique, la couche de primaire est recouverte d'une couche 4 de finition, qui joue le rôle de barrière principale contre des influences environnementales et qui fournit à l'avion une décoration et un camouflage. Dans l'état de la technique, la couche de finition est typiquement formulée à l'aide d'une résine polyuréthane/polyol.

Un objet de la présente invention est de fournir un revêtement destiné à prendre la place de la couche 4 de finition. La matrice du revêtement selon l'invention se doit donc d'être compatible avec la couche 3 de primaire. Cette compatibilité est atteinte par la matrice uréthane-acrylate utilisée dans la présente invention.

La matrice uréthane-acrylate présente également une bonne résistance à des agressions environnementales, notamment aux rayonnements UV.

La figure 2 représente une vue en coupe d'un revêtement pour aéronefs selon un autre mode de réalisation de l'invention. En effet, dans certains cas, la couche 4 de finition comporte deux sous-couches : une sous-couche 5 de base et une sous-couche 6 dé surface. Un autre objet de la présente invention est de fournir un revêtement destiné à prendre la place de la sous-couche 6 de surface. La matrice uréthane-acrylate offre une bonne compatibilité avec la plupart des sous-couches 5 de base connues de l'état de la technique.

D'une manière plus générale, la matrice uréthane-acrylate est compatible avec de nombreux types de revêtements. Lesdits revêtements peuvent comporter une matrice organique, ou encore une matrice hybride organique/minérale comme les revêtements issus d'un procédé sol-gel

La matrice uréthane-acrylate peut également présenter une bonne adhérence à des revêtements ayant une matrice minérale. Il est donc possible d'utiliser un revêtement selon l'invention pour remplacer une couche 3 de primaire.

D'une manière générale, les oligomères uréthane-acrylate selon l'invention comprennent un bloc polyuréthane, linéaire ou ramifié, comportant des groupements acrylate en terminaison de chaînes ou en positions latérales sur une chaîne. Par « bloc polyuréthane», on entend une macromolécule comportant des fonctions uréthane, ou -NH-CO-O-. Préférentiellement, le bloc polyuréthane est aliphatique, c'est-à-dire dépourvu de groupement à caractère aromatique.

Un exemple d'oligomère polyuréthane-acrylate selon l'invention correspond à la formule (I) ci-dessous :

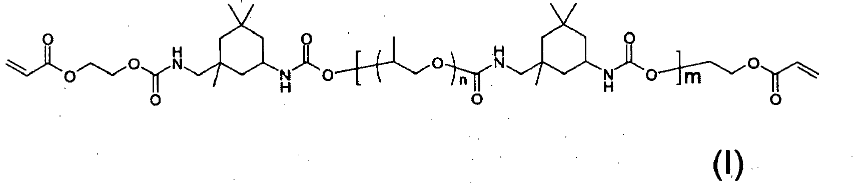

Selon une forme de l'invention, le bloc polyuréthane est un copolymère uréthane-siloxane. Plus précisément, le bloc polyuréthane comporte des motifs polydialkylsiloxane, par exemple polydiméthylsiloxane. L'utilisation de blocs polyuréthane-polydiméthylsiloxane permet d'augmenter l'hydrophobicité de la surface du revêtement.

Selon une forme préférentielle de l'invention, la masse molaire moyenne en nombre des oligomères uréthane-acrylate est comprise entre 1000 et 5000 g.mol⁻¹ afin d'obtenir une viscosité satisfaisante de la composition. Des résines appropriées à la réalisation de compositions selon l'invention sont notamment commercialisées sous la marque Ebecryl^{®} (Cytec).

Selon une forme préférentielle de l'invention, le diluant copolymérisable avec les oligomères uréthane-acrylate porte une ou des fonctions acrylate ou méthacrylate. Il s'agit par exemple du tripropylène glycol diacrylate ou du 1,6-hexanediol diacrylate.

Les compositions selon l'invention comportent entre 0,5 et 5% en masse de silice pyrogénée ayant subi un traitement pour augmenter l'hydrophobicité de sa surface. Typiquement, les silices pyrogénées sont rendues hydrophobes par un traitement à base de silanes ou de polysilanes, afin de diminuer le nombre de fonctions hydroxyles libres à leur surface. Préférentiellement, le taux d'hydroxyles résiduels est inférieur ou égal à 50%. Plus préférentiellement, il est inférieur ou égal à 25%.

Selon une forme préférentielle de l'invention, la silice pyrogénée a une aire spécifique comprise entre 80 et 200 m²·g⁻¹. Cette aire spécifique est appropriée à la production de surfaces hydrophobes.

Des silices pyrogénées convenant à la réalisation de compositions selon l'invention sont notamment commercialisées sous la marque HDK^{®} (Wacker).

Selon une forme préférentielle de l'invention, les compositions comprennent en outre au moins un composé fluoré copolymérisable avec les oligomères uréthane-acrylate. Intégrés dans un revêtement polymère, les composés fluorés permettent d'améliorer chimiquement l'hydrophobicité des surfaces formées en diminuant l'énergie de surface.

Préférentiellement, lesdits composés fluorés portent une ou plusieurs fonctions acrylate ou méthacrylate. Il peut s'agir d'une molécule de type hydrofluorocarbone, linéaire ou ramifié, portant un groupement acrylate ou méthacrylate. Par exemple, le composé fluoré correspond à la formule (II) ci-dessous : 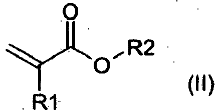 dans laquelle R1 = -H ou =CH₃ et R2 est un alkyle fluoré ou perfluoré, comportant de 3 à 12 atomes de carbone. Des composés particuliers sont cités dans les exemples de réalisation de compositions selon l'invention.

Selon une autre forme préférentielle de l'invention, les compositions comprennent en outre au moins un silsesquioxane oligomérique polyhédral, ou POSS (*Polyhedral Oligomeric Silsesquioxane*), portant au moins une fonction copolymérisable avec les oligomères uréthane-acrylate. Préférentiellement, ladite fonction copolymérisable est une fonction acrylate ou méthacrylate.

Les POSS ont une structure en trois dimensions qui permet d'introduire une rugosité à la surface du revêtement, à une échelle inférieure à la rugosité introduite par la silice pyrogénée. Cette rugosité contribue à l'effet Lotus de la surface de revêtement.

Plus préférentiellement, le POSS comprend au moins un groupement fluoré. Un exemple de composé approprié est représenté ci-dessous (formule (III)) : 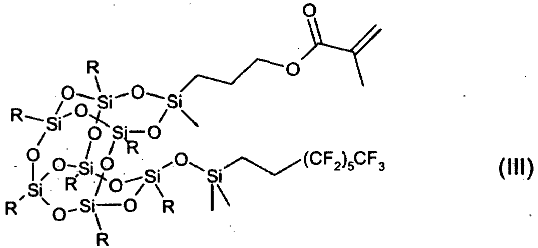 dans laquelle R représente un groupement alkyle linéaire ou ramifié, comportant de 1 à 8 atomes de carbones. Par exemple, R représente le cyclopentyle.

Dans les modes de réalisation impliquant une polymérisation sous ultraviolets de la composition, cette dernière doit contenir un photo-initiateur de polymérisation des acrylates, comme par exemple le 1-hydroxy-cyclohexyl-phénylcétone. Ce composé est notamment commercialisé sous la marque Irgacure^{®} 184 (Ciba).

Un procédé de formation d'un revêtement tel que représenté aux figures 1 et 2 peut être le suivant : tout d'abord, la surface destinée à recevoir le revêtement est préparée. Dans les modes de réalisation représentés aux figures 1 et 2, ladite surface est formée respectivement par la couche 3 de primaire et par la sous-couche 5 de base. Une préparation appropriée de ladite surface peut consister en une activation par lavage avec un solvant, ou en une activation mécanique, ou tout autre type de préparation connu de l'état de la technique.

Ensuite, une couche 4 ou 6 d'une composition selon l'invention, à l'état liquide, est déposée sur la couche 3 ou 5. Le dépôt peut par exemple être effectué par un applicateur spiralé ou *bar coater.* D'autres méthodes connues de dépôt, telles qu'une aspersion, peuvent être utilisées.

Préférentiellement, la couche 4 ou 6 de composition a une épaisseur comprise entre 5 et 300 µm, plus préférentiellement entre 20 et 150 µm.

Enfin, la couche 4 ou 6 est soumise à un traitement de polymérisation. Il peut s'agir d'un traitement thermique, ou encore d'un traitement sous ultraviolets. Afin de pouvoir utiliser un traitement sous ultraviolets, il est nécessaire que la composition formant la couche 4 ou 6 contienne un photo-initiateur de polymérisation des acrylates.

La figure 3 représente une vue en coupe d'un revêtement 10 pour aéronefs, selon un autre mode de réalisation de l'invention. La surface dudit revêtement 10 est constituée par une couche 7 formée à partir d'une composition selon l'invention. La couche 7 est en contact avec une sous-couche 8, par exemple une couche de primaire.

La couche 7 de surface comporte des reliefs, plus particulièrement des sillons 9. Ces sillons 9 sont par exemple formés mécaniquement, avant ou pendant la polymérisation de la couche 7. Les sillons 9 sont parallèles et se développent selon un axe perpendiculaire au plan de coupe de la figure 3.

La traînée d'un aéronef est générée par différentes conditions associées aux mouvements des particules d'air autour dudit aéronef. La force de traînée doit être compensée par une consommation énergétique supplémentaire. Une diminution peu importante de la traînée peut réduire significativement la consommation en carburant d'un avion.

Il est particulièrement intéressant de réduire la traînée de frottement. Cette dernière est liée aux différences de vitesses entre des filets de fluide à proximité d'une surface solide. Au contact de ladite surface se forme une couche limite, dans laquelle l'écoulement du fluide est turbulent. Ce sont ces turbulences qui génèrent la force de traînée de frottement.

Il est connu que les turbulences de la couche limite sont diminuées lorsque la surface solide comporte des micro-sillons, ou *riblets,* parallèles à la direction du flux. La forme linéaire des sillons canalise le fluide et facilite son écoulement à proximité de la surface. Ce phénomène a déjà été exploité pour la fabrication d'un film réducteur de traînée, comme décrit dans le brevet EP1578600.

Selon un plan de coupe perpendiculaire à leur axe de développement, les sillons 9 peuvent avoir un profil en V ou en dents de scie, comme représenté à la figure 3. Ils peuvent adopter d'autres types de profil, par exemple en U, c'est-à-dire que les parois d'un sillon 9 sont recourbées de manière concave. Les sillons peuvent également avoir un profil rectangulaire, c'est-à-dire comporter un fond parallèle à la surface de la couche 8 et des parois perpendiculaires à ladite surface. De nombreuses variantes, connues de l'état de la technique, sont également possibles.

Selon le mode de réalisation de l'invention représenté à la figure 3, une épaisseur 11 de la couche 7 est préférentiellement comprise entre 15 et 300 µM. L'épaisseur 11 est mesurée dans une zone où elle est maximale en tenant compte du profil en dents de scie des sillons 9. Une profondeur 12 d'un sillon 9 est préférentiellement comprise entre 10 et 100 µM.

Un procédé de formation d'un revêtement 10 tel que représenté à la figure 3 peut être le suivant : tout d'abord, la surface de la couche 8 destinée à recevoir le revêtement est préparée. Si la couche 8 est une couche de primaire ou une sous-couche de base, les types de préparation décrits précédemment peuvent être utilisés. Ensuite, une couche d'une composition selon l'invention, contenant un photo-initiateur, est déposée sur la couche 8. Le dépôt peut s'effectuer à l'aide d'un applicateur spiralé.

Ensuite, des sillons 9 sont formés mécaniquement, à l'aide d'un outil de forme adaptée au profil de sillons souhaité. Dans l'exemple représenté à la figure 3, il peut s'agir d'un outil de type peigne, présentant un profil en dents de scie. Simultanément au passage de l'outil, une lampe à ultraviolets est passée au-dessus de la couche 7 afin de figer les sillons 9 dans la forme conférée par ledit outil.

Une variante à ce procédé comporte les étapes suivantes : préparation de la surface de la couche 8, puis dépôt d'une couche d'une composition selon l'invention, contenant un photo-initiateur. Le dépôt est effectué en répartissant la composition de manière inégale selon la zone de surface 8 concernée, de manière à former les sillons 9. Simultanément au dépôt de la composition, une lampe à ultraviolets est passée au-dessus de la couche 7 de composition selon l'invention.

Les propriétés autonettoyantes et antigivre du revêtement selon l'invention sont particulièrement avantageuses pour une surface comportant des micro-reliefs tels que les sillons 9 décrits ci-dessus. En effet, les propriétés autonettoyantes empêchent que les sillons ne soient bouchés par des gouttes d'eau ou par des saletés. De même, les propriétés antigivre évitent l'obturation des sillons par de la glace.

Par ailleurs, la bonne résistance à l'érosion des compositions assure la persistance dans le temps des micro-reliefs sur la surface de revêtement.

Les compositions selon l'invention présentent une forte viscosité au repos, ainsi qu'un comportement rhéo-fluidifiant (*shear-thinning behaviour*). Ces propriétés sont notamment liées à des interactions entre les chaînes d'oligomères et les particules de silice.

De telles propriétés physiques sont favorables à la formation de sillons 9 telle que décrits ci-dessus. En effet, la formation des sillons 9 par un procédé mécanique conduit à appliquer à la couche de composition une contrainte de cisaillement élevée. La composition présente alors une faible viscosité, ce qui facilite sa mise en forme. Après la disparition de la contrainte de cisaillement, la composition retrouve une viscosité élevée. Cette dernière permet aux sillons 9 de rester en forme jusqu'à leur solidification par polymérisation de la composition.

Selon un autre mode de réalisation de l'invention, le revêtement 10 représenté à la figure 3 est destiné à être appliqué, sous forme d'un film solide, à la surface d'un appareil de type aéronef. La couche 8 peut alors être constituée d'un matériau adhésif, destiné à être mis en contact avec ladite surface d'un appareil. De tels matériaux adhésifs sont connus de l'état de la technique et sont notamment décrits dans le brevet EP1578600.

Le revêtement 10 peut également comporter une ou plusieurs couches intermédiaires entre la couche 7 de surface et la couche 8 de matériau adhésif.

Des revêtements comportant une couche de surface et une couche adhésive peuvent également être réalisés avec une couche plane de surface, ne comportant pas de micro-reliefs.

Un procédé de formation d'un tel film adhésif peut comporter les étapes précédemment décrites de dépôt, de formation éventuelle de sillons 9 et de polymérisation d'une composition selon l'invention, sur une couche 8 de matériau adhésif ou sur une couche intermédiaire destinée à être placée entre les couches 7 et 8.

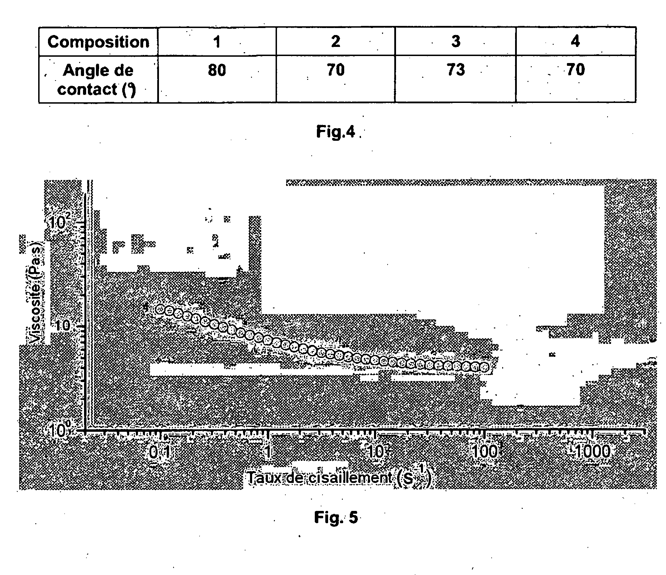

La figure 4 représente un tableau comparatif de mesures d'angles de contact de l'eau (*water contact angle*) pour des revêtements obtenus à partir de différentes compositions selon l'invention. Ces compositions correspondent à des modes particuliers de réalisation de l'invention :

### Composition 1 :

- 70% en masse d'oligomère uréthane-acrylate aliphatique de masse molaire moyenne en nombre égale à 4000 g.mol⁻¹ ;
- 24% en masse de tripropylène glycol diacrylate ;
- 5% en masse de 1-hydroxy-cyclohexyl-phényl cétone ;
- 1% de silice pyrogénée hydrophobe fonctionnalisée polydiméthyl-siloxane, possédant un taux de fonctions hydroxyles résiduelles égal à 25% et une aire spécifique égale à 120 m²·g⁻¹ ;

Ce mélange est préparé par agitation (1500 tr/min) pendant 30 minutes à l'aide d'un disperseur adapté à la viscosité du milieu. La formulation est ensuite dégazée pendant 60 minutes sous un vide primaire et faiblement agitée mécaniquement (100tr/min).

### Composition 2 :

- 61% en masse d'oligomère uréthane-acrylate aliphatique de masse molaire moyenne en nombre égale à 1800 g.mol-1 ;
- 33% en masse de 1,6-hexanediol diacrylate ;
- 5% en masse de 1-hydroxy-cyclohexyl-phényl cétone ;
- 1% de silice pyrogénée hydrophobe fonctionnalisée polydiméthyl-siloxane, possédant un taux de fonctions hydroxyles résiduelles égal à 25% et une aire spécifique égale à 120 m².g⁻¹ ;

Ce mélange est préparé par agitation (1500 tr/min) pendant 30 minutes à l'aide d'un disperseur adapté à la viscosité du milieu. La formulation est ensuite dégazée pendant 60 minutes sous un vide primaire et faiblement agitée mécaniquement (100tr/min).

### Composition 3:

- 60% en masse d'oligomère uréthane-acrylate aliphatique de masse molaire moyenne en nombre égale à 1800 g.mol-1 ;
- 32% en masse de 1,6-hexanediol diacrylate ;
- 5% en masse de 1-hydroxy-cyclohexyl-phényl cétone ;
- 1% de silice pyrogénée hydrophobe fonctionnalisée polydiméthyl-siloxane, possédant un taux de fonctions hydroxyles résiduelles égal à 25% et une aire spécifique égale à 120 m².g⁻¹ ;
- 2% de 1H,1H,2H,2H-perfluorodécyl acrylate.

Ce mélange est préparé par agitation (1500 tr/min) pendant 30 minutes à l'aide d'un disperseur adapté à la viscosité du milieu. La formulation est ensuite dégazée pendant 60 minutes sous un vide primaire et faiblement agitée mécaniquement (100tr/min).

### Composition 4 :

- 60% en masse d'oligomère uréthane-acrylate aliphatique de masse molaire moyenne en nombre égale à 1800 g.mol-1 ;
- 32% en masse de 1,6-hexanediol diacrylate ;
- 5% en masse de 1-hydroxy-cyclohexyl-phényl cétone ;
- 1% de silice pyrogénée hydrophobe fonctionnalisée polydiméthylsiloxane, possédant un taux de fonctions hydroxyles résiduelles égal à 25% et une aire spécifique égale à 120 m².g⁻¹ ;
- 2% de 2,2,3,4,4,4-hexafluorobutyl acrylate.

Ce mélange est préparé par agitation (1500 tr/min) pendant 30 minutes à l'aide d'un disperseur adapté à la viscosité du milieu. La formulation est ensuite dégazée pendant 60 minutes sous un vide primaire et faiblement agitée mécaniquement (100tr/min).

Chacune des compositions précédemment décrites est appliquée sur une plaque d'aluminium (alliage A2024T3, plaqué) de 80 x 125 x 1.6 mm revêtue d'un film polyuréthane, à l'aide d'un applicateur spiralé, après activation mécanique de la surface et nettoyage à l'aide d'un solvant organique de type diestone. Le substrat enduit est alors polymérisé sous une lampe à vapeurs de mercure moyenne pression, par convoyage en deux passages. Un premier passage est réalisé à la vitesse de 9 m/min et un deuxième passage à 3m/min ce qui représente une dose UV totale égale à 441mJ/m². Le revêtement après polymérisation présente une épaisseur moyenne de 60 µm.

Les mesures d'angles de contact de l'eau sont effectuées à partir d'un appareil Digidrop de GXB Scientific Instruments. Dix mesures sont effectuées par revêtement et une valeur moyenne est calculée.

Les valeurs moyennes obtenues pour les revêtements issus des compositions 1 à 4 figurent dans le tableau représenté à la figure 4. Plus l'angle de contact est élevé, plus la surface est hydrophobe.

Les revêtements possèdent un angle de contact de l'eau compris entre 70° et 80°, ce qui correspond à une bonne hyd rophobicité des surfaces formées. La comparaison des angles des compositions 2, 3 et 4 montre que l'adjonction d'un composé fluoré, particulièrement le 1H,1H,2H,2H-perfluorodécyl acrylate, augmente l'hydrophobicité de la surface de revêtement.

La figure 5 représente un graphique montrant la variation de viscosité de la composition 2 en fonction du taux de cisaillement appliqué. Les mesures ont été effectuées à l'aide d'un rhéomètre MCR 301 (Anton Paar).

On constate que la viscosité diminue à mesure que le taux de cisaillement augmente, ce qui est caractéristique d'un comportement rhéo-fluidifiant. Vraisemblablement, cette diminution de la viscosité est liée à la rupture, par le cisaillement, d'interactions entre la silice et les chaînes d'oligomères. Une structure en réseau étant détruite; la viscosité apparente de la composition est plus faible qu'au repos. Lors de l'arrêt du cisaillement, il est à noter que ladite structure de réseau est rapidement restaurée. Lors de la formation de sillons par l'action d'un outil de forme appropriée, les sillons conservent leur forme suffisamment longtemps pour permettre leur solidification par polymérisation.

## Revendications

1. Procédé de revêtement d'une surface, comprenant les étapes suivantes :
- appliquer sur une surface (8) une couche (7) d'une composition comprenant :
- entre 35% et 75% en masse d'oligomères uréthane-acrylate ayant une masse molaire moyenne en nombre comprise entre 1000 et 5000 g.mol⁻¹;
- entre 15% et 60% en masse d'un diluant copolymérisable avec les oligomères uréthane-acrylate ;
- entre 0,5% et 5% en masse de silice pyrogénée ayant subi un traitement pour augmenter l'hydrophobicité de sa surface.
- un photo-initiateur de polymérisation,
ladite couche ayant une épaisseur comprise entre 15 et 300 µm,
- former mécaniquement des sillons (9) parallèles sur la couche de composition, lesdits sillons ayant une profondeur de 10 à 100 µm, et polymériser simultanément ladite couche sous ultraviolets.

2. Procédé selon la revendication 1, tel que la silice pyrogénée de la composition est fonctionnalisée polydiméthylsiloxy- ou diméthylsiloxy-, avec un taux de fonctions hydroxyles résiduelles inférieur ou égal à 50%.

3. Procédé selon la revendication 1 ou la revendication 2, tel que la silice pyrogénée de la composition a une aire spécifique comprise entre 80 et 200 m².g⁻¹.

4. Procédé selon l'une des revendications précédentes, tel que la composition comprend en outre entre 0,5% et 5% en masse d'au moins un composé fluoré copolymérisable avec les oligomères uréthane-acrylate.

5. Procédé selon la revendication 4, tel qu'un composé fluoré est un hydrofluorocarbone, linéaire ou ramifié, portant un groupement acrylate ou méthacrylate.

6. Procédé selon l'une des revendications précédentes, tel que la composition comprend en outre un silsesquioxane oligomérique polyhédral copolymérlsable avec les oligomères uréthane-acrylate.

7. Film (10) pour revêtement de surface, comportant :
- une couche (7) externe, formée par un procédé selon l'une des revendications précédentes,
- une couche (8) adhésive.

## Patentansprüche

1. Verfahren zur Oberflächenbeschichtung, die folgenden Schritte umfassend:
- Aufbringen auf einer Oberfläche (8) einer Schicht (7) einer Zusammensetzung, folgendes umfassend:
- zwischen 35 und 75 Gewichts-% an Urethan-Acrylat-Oligomeren mit einem Molekulargewichtszahlenmittel zwischen 1000 und 5000 g/mol;
- zwischen 15 und 60 Gewichts-% eines mit den Urethan-Acrylat-Oligomeren copolymerisierbaren Verdünners;
- zwischen 0,5 und 5 Gewichts-% an pyrogeniertem Silicium, das eine Behandlung erfahren hat, um die Hydrophobie seiner Oberfläche zu erhöhen.
- einen Photoinitiator zum Polymerisieren,
wobei die besagte Schicht eine Stärke zwischen 15 und 300 µm aufweist,
- Mechanische Ausbildung von parallelen Furchen (9) auf der Zusammensetzungsschicht, wobei die besagten Furchen eine Tiefe von 10 bis 100 µm aufweisen, und das gleichzeitige Polymerisieren der besagten Schicht unter ultravioletten Strahlen.

2. Verfahren nach Anspruch 1, wobei das pyrogenierte Silicium der Zusammensetzung Polydimethylsiloxy oder Dimethylsiloxy funktionalisiert ist, mit einem Anteil an residualen Hydroxylfunktionen kleiner oder gleich 50%.

3. Verfahren nach Anspruch 1 oder Anspruch 2, wobei das pyrogenierte Silicium der Zusammensetzung eine spezifische Oberfläche zwischen 80 und 200 m²/g aufweist.

4. Verfahren nach einem der vorherigen Ansprüche, wobei die Zusammensetzung darüber hinaus zwischen 0,5 und 5 Gewichts-% an zumindest einer mit den Urethan-Acrylat-Oligomeren copolymerisierbaren fluorierten Verbindung umfasst.

5. Verfahren nach Anspruch 4, wobei eine fluorierte Verbindung ein linearer oder verzweigter Fluorkohlenwasserstoff ist, der eine Acrylat- oder Metacrylatgruppe trägt.

6. Verfahren nach einem der vorherigen Ansprüche, wobei die Verbindung darüber hinaus ein mit den Urethan-Acrylat-Oligomeren copolymerisierbares oligomeres polyhedrales Silsesquioxan umfasst.

7. Folie (10) zur Oberflächenbeschichtung, folgendes umfassend:
- eine externe Schicht (7), die durch ein Verfahren nach einem der vorherigen Ansprüche gebildet wird,
- eine Klebeschicht (8).

## Claims

1. Method for coating a surface, comprising the following steps:
- applying onto a surface (8) a layer (7) with a composition comprising:
- a mass percentage of urethan-acrylate oligomer, with an average molar mass in number between 1000 and 5000 g.mol⁻¹, between 35% and 75%;
- a mass percentage of a diluting agent, copolymerizable with urethan-acrylate oligomers, between 15% and 60%;
- a mass percentage of pyrogenic silica, after a treatment for increasing the hydrophobicity of its surface, between 0.5% and 5%;
- a polymerization photo-catalyst,
said layer having a thickness comprised between 15 and 300 µm,
- mechanically forming parallel ribs (9) onto the composition layer, said ribs having a heights from 10 to 100 µm, and simultaneously polymerizing said layer with ultraviolet radiations.

2. Method according to claim 1, wherein pyrogenic silica of the composition has a polydimethylsiloxy- or dimethylsiloxy- function, with a percentage of residual hydroxyl functions lower than or equal to 50%.

3. Method according to claim 1 or claim 2, wherein the pyrogenic silica of the composition has a specific surface comprised between 80 and 200 m².g⁻¹

4. Method according to any one of the preceding claims, wherein the composition moreover has a mass percentage of at least one fluorinated compound, copolymerizable with urethan-acrylate oligomers, between 0.5% and 5%.

5. Method according to claim 4, wherein a fluorinated compound is a hydrofluorocarbon, linear or ramified, with an acrylate or methacrylate group.

6. Method according to any one of the preceding claims, wherein the composition moreover comprises a polyhedral oligomeric silsesquioxane copolymerizable with urethan-acrylate oligomers.

7. Film (10) for surface coating, comprising:
- an external layer (7), formed by a method according to any one of the preceding claims,
- an adhesive layer (8).
